# EUROPEAN PATENT SPECIFICATION

(11) **EP 2 963 720 B1**
(45) Date of publication and mention of the grant of the patent: **28.12.2016**
(21) Application number: 15172049.7
(22) Date of filing: 15.06.2015
(51) Int. Cl.: H01M 8/06, H01M 8/04

(54) **FUEL CELL SYSTEM**
BRENNSTOFFZELLENSYSTEM
SYSTÈME DE PILE À COMBUSTIBLE

(30) Priority: 30.06.2014 JP 2014133941
(43) Date of publication of application: 06.01.2016
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP); Suzuki, Gorou, Kariya-shi, Aichi 448-8650 (JP); Uenoyama, Satoru, Osaka-shi, Osaka 541-0046 (JP); Sogi, Tadayuki, Osaka-shi, Osaka 448-8650 (JP)
(74) Representative: TBK

(56) References cited:
- EP-A1- 1 727 227
- JP-A- 2011 159 485
- US-A1- 2014 057 185

## Description

### TECHNICAL FIELD

This disclosure relates to a fuel cell system.

### BACKGROUND DISCUSSION

An example of a fuel cell system is disclosed in JP 2011-159485A (Reference 1). As illustrated in Fig. 1 of Reference 1, the fuel cell system includes a desulfurizer 22 for removing a sulfur component from a fuel gas which is fed by a booster pump 24 provided in a fuel gas supply flow path 14, a reformer 4 for reforming the desulfurized fuel gas, and a fuel cell stack 6 for generating electricity by using an oxidation-reduction reaction of the reformed fuel gas and oxidant. Since the desulfurizer 22 performs a desulfurization reaction on the fuel gas under a condition that hydrogen is included in the desulfurizer 22, the fuel cell system includes a recycling flow path 48 for causing a portion of the reformed fuel gas which is obtained by the reformer 4 performing reformation to return to the desulfurizer 22. The recycling flow path 48 has one end side which is connected to a reformed fuel gas supply flow path 8 and another end side which is connected between the booster pump 24 of the fuel gas supply flow path and a flow rate sensor 26. A needle valve 62 is provided as pressure control means on an introduction side of a connection portion with the recycling flow path 48 in the fuel gas supply flow path 14, in order to prevent backflow of the fuel gas which passes through the fuel gas supply flow path 14, to the recycling flow path 48. The needle valve 62 causes pressure of a discharge side to be held to be lower than the atmospheric pressure, and thereby the backflow of the fuel gas which passes through the fuel gas supply flow path 14 to the recycling flow path 48 is prevented.

In the fuel cell system disclosed in Reference 1 which is described above, the needle valve 62 is provided as pressure control means on the introduction side of the connection portion with the recycling flow path 48 in the fuel gas supply flow path 14, in order to prevent the backflow of the fuel gas which passes through the fuel gas supply flow path 14, to the recycling flow path 48. In this fuel cell system, the fuel gas supply flow path 14 holds pressure (load) on the introduction side of the booster pump to be smaller than the atmospheric pressure by using the needle valve 62. However, there is a problem that if setting pressure on the discharge side by the needle valve 62 is inappropriate, a fuel of a flow rate which is greater than the minimum flow rate which is necessary for generation of the fuel cell stack 6 may be fed when the booster pump 24 is driven with the minimum output, and generation efficiency of the fuel cell stack 6 may be degraded.

### SUMMARY

Thus, a need exists for a fuel cell system which can ensure the minimum flow rate of the fuel cell system and suppress degradation of generation efficiency even though a raw material pump is driven with the minimum output.

An aspect of this disclosure is directed to a fuel cell system including a fuel cell that generates electricity using a fuel and an oxidant gas, a reforming unit that generates the fuel with reforming water and a raw reforming material from a raw reforming material supply source, and supplies the generated fuel to the fuel cell, a desulfurizer that removes a sulfur component which is contained in the raw reforming material and supplies the desulfurized raw reforming material to the reforming unit, a raw reforming material supply pipe that causes the raw reforming material to be fed to the desulfurizer, a raw material pump that is provided in the raw reforming material supply pipe and forcibly supplies the raw reforming material to the desulfurizer, a recycling fuel pipe that causes a portion of the fuel which is fed to the fuel cell from the reforming unit to return as a recycling fuel to an introduction side of the raw material pump in the raw reforming material supply pipe and a pressure control valve that is provided on the raw reforming material supply source side of a connection portion of the raw reforming material supply pipe with the recycling fuel pipe, and is opened when pressure on a discharge side reaches a predetermined negative pressure, wherein the predetermined negative pressure of the pressure control valve is set such that a flow rate of the raw reforming material from the raw material pump is caused to be less than a minimum flow rate which is the minimum requirement for the fuel cell system, at the minimum pump opening degree which allows the raw material pump to perform discharge.

According to this configuration, when driving control for the raw material pump is started, the raw material pump is allowed to perform discharge, and pressure on the introduction side of the raw material pump, that is, on the discharge side of the pressure control valve becomes negative by attraction of the raw material pump. If pressure on the discharge side of the pressure control valve reaches the predetermined negative pressure and the pressure control valve is opened, discharge of the raw reforming material from the raw material pump is started. At this time, a flow rate of the raw reforming material from the raw material pump is less than the minimum flow rate which is a minimum requirement for the fuel cell system, at the minimum pump opening degree which allows the raw material pump to perform discharge. Accordingly, even though the raw material pump is driven with a minimum output, it is possible to reliably ensure the minimum flow rate for the fuel cell system, and to suppress degradation of generation efficiency.

Another aspect of this disclosure is directed to the fuel system according to the aspect of this disclosure, wherein the predetermined negative pressure of the pressure control valve may be set such that the pressure control valve is opened at the same time as when the raw material pump has the minimum pump opening degree.

According to this configuration, it is possible to control a flow rate from the raw material pump without driving of the raw material pump more than necessary.

Still another aspect of this disclosure is directed to the fuel system according to the aspect of this disclosure, which further includes a flow rate sensor that is provided on the introduction side of the pressure control valve in the raw reforming material supply pipe or between the pressure control valve and the connection portion with the recycling fuel pipe, and detects a flow rate of the raw reforming material, and a gas leakage detection section that detects gas leakage of the raw reforming material supply pipe or the recycling fuel pipe based on the flow rate of the raw reforming material which is detected by the flow rate sensor when the raw material pump is driven.

According to this configuration, it is possible to detect a gas leakage from the raw reforming material supply pipe or the recycling fuel pipe in early stages by the gas leakage detection section.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating an overview of an embodiment of a fuel cell system disclosed here;
Fig. 2 is a diagram illustrating characteristics of a pressure control valve which is illustrated in Fig. 1: Fig. 2 illustrates a case where discharge from a raw material pump is started, and then the pressure control valve is opened. An upper stage indicates discharge force of the raw material pump for a control command value (duty ratio), and a flow rate of a raw reforming material from the raw material pump. A lower stage indicates pressure on a discharge side of the pressure control valve for the control command value;
Fig. 3 is a diagram illustrating the characteristics of the pressure control valve which is illustrated in Fig. 1: Fig. 3 illustrates a case where if discharge from the raw material pump is started, the pressure control valve is simultaneously opened. An upper stage indicates the discharge force of the raw material pump for the control command value (duty ratio), and the flow rate of the raw reforming material from the raw material pump. A lower stage indicates pressure on the discharge side of the pressure control valve for the control command value;
Fig. 4 is a diagram illustrating the characteristics of the pressure control valve which is illustrated in Fig. 1: Fig. 4 illustrates a case where the pressure control valve is opened when pressure on the discharge side becomes the same as the atmospheric pressure. An upper stage indicates the discharge force of the raw material pump for the control command value (duty ratio), and the flow rate of the raw reforming material from the raw material pump. A lower stage indicates pressure on the discharge side of the pressure control valve for the control command value;
Fig. 5 is a block diagram of the fuel cell system illustrated in Fig. 1;
Fig. 6 is a diagram illustrating a case where the pressure control valve is opened at atmospheric pressure by illustrating a case where backflow of the raw reforming material in the raw reforming material supply pipe to a recycling gas pipe is prevented;
Fig. 7 is a diagram illustrating a case where the pressure control valve is opened at a predetermined negative pressure Pa by illustrating a case where backflow of the raw reforming material in the raw reforming material supply pipe to the recycling gas pipe is prevented; and
Fig. 8 is a flowchart of a program which is executed by a controller illustrated in Fig. 1.

### DETAILED DESCRIPTION

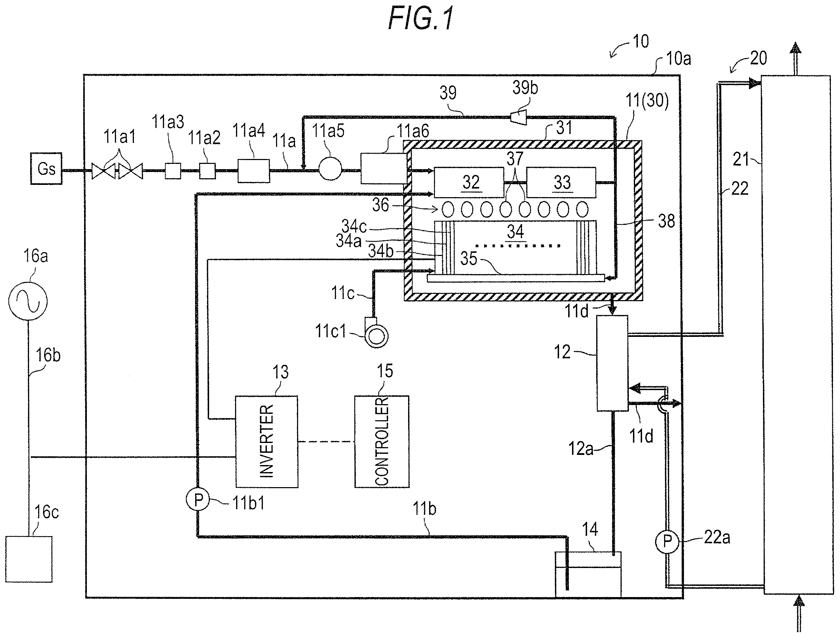

Hereinafter, an embodiment of a fuel cell system disclosed here will be described. As illustrated in Fig. 1, the fuel cell system includes an electricity generation unit 10 and a hot water storage tank 21. The electricity generation unit 10 includes a housing 10a, a fuel cell module 11, a heat exchanger 12, an inverter 13, a water tank 14, and a control device 15.

The fuel cell module 11 is configured so as to include at least a fuel cell 34 which will be described later. A raw reforming material, reforming water, and cathode air are fed to the fuel cell module 11. Specifically, one end of a raw reforming material supply pipe 11 a is connected to a raw reforming material supply source Gs (there may be a case of simply being referred to as the supply source Gs) and the raw reforming material is fed to the raw reforming material supply pipe 11a. Another end of the raw reforming material supply pipe 11a is connected to the fuel cell module 11. One end of a water supply pipe 11 b is connected to the water tank 14, and the reforming water is supplied to the water supply pipe 11 b. Another end of the water supply pipe 11 b is connected to the fuel cell module 11. The water supply pipe 11 b includes a reforming water pump 11 b1. One end of a cathode air supply pipe 11c is connected to a cathode air blower 11 c1 and the cathode air is fed to the cathode air supply pipe 11c. Another end of the cathode air supply pipe 11 c is connected to the fuel cell module 11.

The raw reforming material supply pipe 11 a will be described in detail. The raw reforming material supply pipe 11 a includes a shutoff valve 11a1, a pressure sensor 11 a3, a flow rate sensor 11 a2, a pressure control valve 11 a4, a raw material pump 11 a5, and a desulfurizer 11a6 in an upstream order. The shutoff valve 11a1, the flow rate sensor 11 a2, the pressure sensor 11 a3, the pressure control valve 11 a4, the raw material pump 11 a5, and the desulfurizer 11 a6 are stored in the housing 10a.

The shutoff valve 11a1 is a valve (dual valve) which shuts the raw reforming material supply pipe 11 a off so as to be freely opened in accordance with a command of the control device 15. The flow rate sensor 11 a2 detects the flow rate of the fuel (raw reforming material) which is fed to the fuel cell 34, that is, the flow amount per unit time, and transmits a detection result to the control device 15. The pressure sensor 11 a3 detects pressure (particularly, pressure at an installation place of the pressure sensor 11 a3) of the raw reforming material which is fed to the fuel cell 34, and transmits a detection result to the control device 15.

The pressure control valve 11a4 controls the raw reforming material which is introduced (flows) into the raw reforming material supply pipe 11a to generate a predetermined negative pressure Pa, and discharges (flows out) the controlled raw reforming material. The pressure control valve 11 a4 is provided on the supply source Gs side of a connection portion of the raw reforming material supply pipe 11 a with a recycling gas pipe 39, and is opened when pressure on a discharge side (pressure on an introduction side of the raw material pump 11 a5) reaches the predetermined negative pressure Pa. The pressure control valve 11 a4 is opened only when driving (attraction) of the raw material pump 11 a5 causes the pressure on the discharge side to reach the predetermined negative pressure Pa. Thus, backflow of the raw reforming material in the raw reforming material supply pipe 11 a to the recycling gas pipe 39 is prevented.

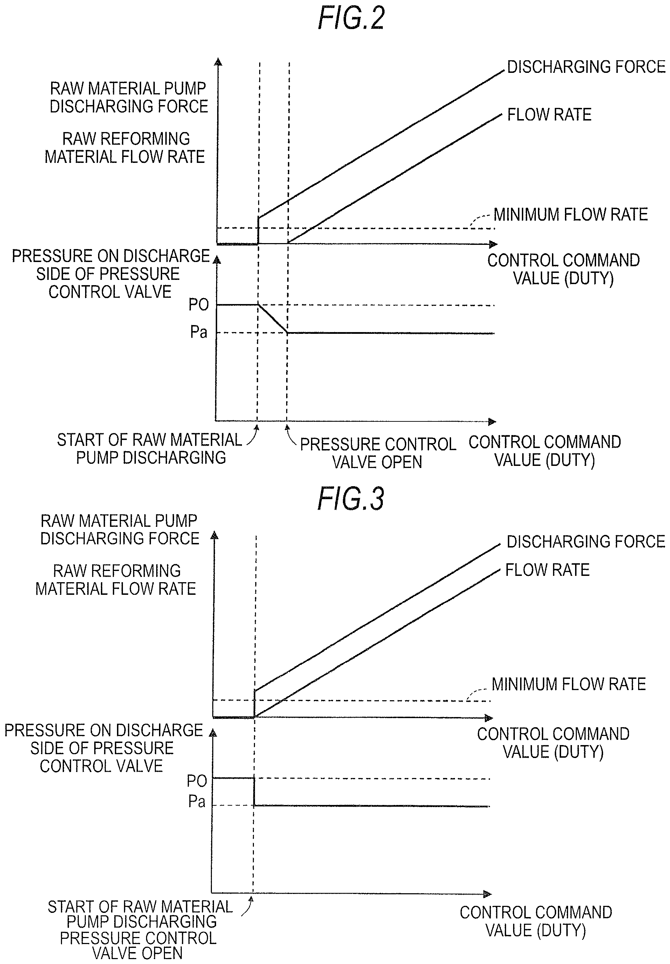

The predetermined negative pressure Pa of the pressure control valve 11 a4 is set such that the flow rate from the raw material pump 11a5 is lower than a minimum flow rate which corresponds to the minimum requirement for the fuel cell system, at a minimum pump opening degree which allows the raw material pump 11 a5 to perform discharge. This point will be described with reference to Figs. 2 and 3. In Figs. 2 and 3, an upper stage indicates discharge force of the raw material pump 11a5 for a control command value (duty ratio) and the flow rate of the raw reforming material from the raw material pump 11 a5. In Figs. 2 and 3, a lower stage indicates pressure on the discharge side of the pressure control valve 11 a4 for the control command value. For example, the minimum flow rate is a flow rate at a minimum output of the fuel cell 34.

Fig. 2 illustrates a case where discharge from the raw material pump 11a5 is started, and then the pressure control valve 11a4 is opened. When a control command value for the raw material pump 11 a5 increases from 0, the discharge force (attraction force) of the raw material pump 11 a5 has a value of 0 until discharge of the raw material pump 11 a5 is started. In this case, pressure on the introduction side of the raw material pump 11 a5, that is, pressure on the discharge side of the pressure control valve 11a4 corresponds to an atmospheric pressure P0. A discharge amount (flow amount of the raw reforming material) from the raw material pump 11 a5 has a value of 0.

If discharge of the raw material pump 11 a5 is started, and then the discharge force (attraction force) of the raw material pump 11 a5 increases, the pressure on the introduction side of the raw material pump 11 a5, that is, the pressure on the discharge side of the pressure control valve 11a4 decreases from the atmospheric pressure P0. As a result, if the pressure on the discharge side of the pressure control valve 11 a4 reaches the predetermined negative pressure Pa, the pressure control valve 11a4 becomes opened. Since the pressure control valve 11a4 maintains to be closed from when discharge of the raw material pump 11 a5 is started, until before the pressure control valve 11a4 becomes opened, the discharge amount (flow amount of the raw reforming material) from the raw material pump 11 a5 is held to have a value of 0.

If the pressure control valve 11 a4 is opened after discharge of the raw material pump 11a5 is started, the discharge amount (flow amount of the raw reforming material) from the raw material pump 11 a5 is started to increase from 0. After that, the discharge force of the raw material pump 11a5 increases with an increase of the control command value, and the discharge amount (flow amount of the raw reforming material) from the raw material pump 11 a5 increases.

In this manner, the predetermined negative pressure Pa of the pressure control valve 11a4 is set such that the flow rate from the raw material pump 11a5 is less than the minimum flow rate which corresponds to the minimum requirement for the fuel cell system at the minimum pump opening degree which allows the raw material pump 11 a5 to perform discharge (the minimum output of the raw material pump 11 a5 which causes the raw material pump 11 a5 to start discharge).

Fig. 3 illustrates a case where a start of discharge from the raw material pump 11 a5 and opening of the pressure control valve 11a4 are performed at the same time. When the control command value for the raw material pump 11 a5 increases from 0, the processes until discharge from the raw material pump 11 a5 is started are similar to the case of Fig. 2.

If the pressure control valve 11 a4 is opened at the same time as when discharge from the raw material pump 11a5 is started, the discharge amount (flow amount of the raw reforming material) from the raw material pump 11 a5 is started to increase from 0. After that, the discharge force of the raw material pump 11 a5 increases with an increase of the control command value, and the discharge amount (flow amount of the raw reforming material) from the raw material pump 11 a5 increases.

In this manner, the predetermined negative pressure Pa of the pressure control valve 11a4 is set such that the flow rate from the raw material pump 11a5 is less than the minimum flow rate which corresponds to the minimum requirement for the fuel cell system at the minimum pump opening degree which allows the raw material pump 11 a5 to perform discharge.

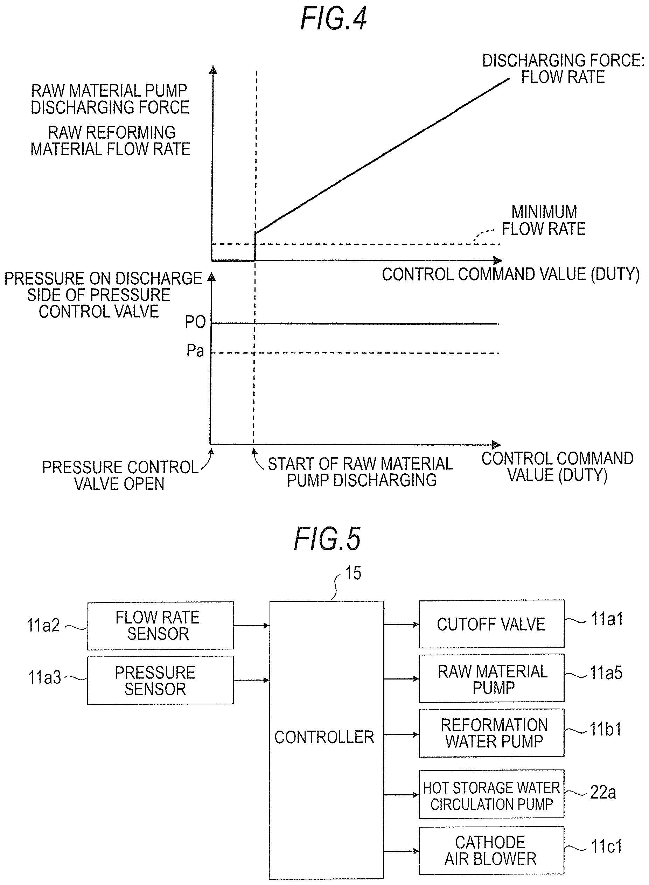

On the other hand, a case where the flow rate from the raw material pump 11a5 is equal to or greater than the minimum flow rate which corresponds to the minimum requirement for the fuel cell system, at the minimum pump opening degree which allows the raw material pump 11a5 to perform discharge will be described with reference to Fig. 4. An example illustrated in Fig. 4 is a case where the pressure control valve 11 a4 is opened if the pressure on the discharge side reaches the atmospheric pressure P0. In Fig. 4, an upper stage indicates the discharge force of the raw material pump 11a5 for a control command value (duty ratio) and the flow rate of the raw reforming material from the raw material pump 11a5. In Fig. 4, a lower stage indicates the pressure on the discharge side of the pressure control valve 11 a4 for the control command value.

When a control command value for the raw material pump 11a5 increases from 0, the discharge force (attraction force) of the raw material pump 11a5 have a value of 0 until discharge of the raw material pump 11 a5 is started. In this case, the pressure on the introduction side of the raw material pump 11 a5, that is, the pressure on the discharge side of the pressure control valve 11a4 corresponds to the atmospheric pressure P0 and the pressure control valve 11a4 is opened. However, since the discharge force (attraction force) of the raw material pump 11 a5 has a value of 0, the discharge amount (flow amount of the raw reforming material) from the raw material pump 11 a5 has a value of 0.

If discharge from the raw material pump 11 a5 is started, the discharge force (attraction force) of the raw material pump 11 a5 increases, and thereby the discharge amount (flow amount of the raw reforming material) from the raw material pump 11a5 increases. At this time, the discharge force and the discharge amount rapidly increase by characteristics of the raw material pump 11 a5, and the flow rate of the raw reforming material is greater than the minimum flow rate of the fuel cell system.

The raw material pump 11 a5 is a fuel supplying device that supplies the fuel (raw reforming material) to the fuel cell 34, and adjusts the amount of the fuel supply (supply flow rate (flow amount per unit time)) from the supply source Gs in accordance with a control command value from the control device 15. The raw material pump 11 a5 is a raw material forcible supplying device that attracts the raw reforming material and pumps the attracted raw reforming material to a reforming unit 33.

The desulfurizer 11a6 removes a sulfur component (for example, sulfur compound) from the raw reforming material. A catalyst and an ultra-high order desulfurization agent are stored in the desulfurizer 11a6. The catalyst causes the sulfur compound and hydrogen to react with each other, and thus causes hydrogen sulfide to be generated. Examples of the catalyst include a nickel-molybdenum base and a cobalt-molybdenum base. As the ultra-high order desulfurization agent, for example, a copper-zinc based desulfurization agent, a copper-zinc-aluminium based desulfurization agent, and the like may be used. The ultra-high order desulfurization agent performs removal by taking in hydrogen sulfide which is converted from the sulfur compound with the catalyst. Such an ultra-high order desulfurization agent shows an excellent desulfurization reaction at a high temperature state of 200°C to 300°C (for example, 250°C to 300°C). Accordingly, the desulfurizer 11a6 is disposed at a location which causes the inside of the desulfurizer 11a6 to have a high temperature state of 200°C to 300°C (for example, 250°C to 300°C). For example, the desulfurizer 11a6 is disposed in a casing 31 or on the outer surface of the casing 31.

The fuel cell system is configured such that a portion of the reformed gas which has been reformed in the reforming unit 33 is caused to return to the raw reforming material supply pipe 11a, regarding use of the ultra-high order desulfurization agent as the desulfurization agent. Specifically, the recycling gas pipe (recycling fuel pipe) 39 is provided in order to cause the reformed gas to return. One end of the recycling gas pipe 39 is connected to a reformed gas supply pipe (fuel supply pipe) 38 which causes the reformed gas (fuel) to be fed to the fuel cell 34 from the reforming unit 33. Another end of the recycling gas pipe 39 is connected to a position on an upstream side of the desulfurizer 11a6 in the raw reforming material supply pipe 11a, more specifically, to a portion between a disposition place of the raw material pump 11 a5 and a disposition place of the pressure control valve 11a4 in the raw reforming material supply pipe 11 a. Thus, a portion of the reformed gas which flows in the reformed gas supply pipe 38 from the reforming unit 33 returns to the raw reforming material supply pipe 11 a through the recycling gas pipe 39.

In this manner, a portion of the reformed gas which contains hydrogen returns to the raw reforming material supply pipe 11 a. Thus, hydrogen in the reformed gas is mixed in the raw reforming material, and the mixture is delivered to the ultra-high order desulfurization agent in the desulfurizer 11a6 through the raw reforming material supply pipe 11a. As a result, the sulfur compound in the raw reforming material reacts with hydrogen and hydrogen sulfide is generated. The hydrogen sulfide is removed by the ultra-high order desulfurization agent.

An orifice 39b is provided in the recycling gas pipe 39. A flow passage hole is provided in the orifice 39b and the flow rate of the reformed gas which returns through the recycling gas pipe 39 is adjusted by using the flow passage hole.

A combustion exhaust gas which is exhausted from the fuel cell module 11, and hot water from the hot water storage tank 21 are supplied to the heat exchanger 12, and the heat exchanger 12 performs heat exchange of the combustion exhaust gas and the hot water. Specifically, the hot water storage tank 21 stores the hot water, and a hot water circulation line 22 in which the hot water is circulated (circulated in a direction of arrows in the figure) is connected to the hot water storage tank 21. A hot storage water circulation pump 22a and the heat exchanger 12 are disposed in order from a lower part of the hot water storage tank 21 toward an upper part on the hot water circulation line 22. An exhaust pipe 11 d from the fuel cell module 11 is connected to (penetratingly provided in) the heat exchanger 12. The heat exchanger 12 is connected to a condensed water supply pipe 12a which is connected to the water tank 14.

In the heat exchanger 12, the combustion exhaust gas from the fuel cell module 11 is introduced into the heat exchanger 12 through the exhaust pipe 11d, and is condensed and cooled by performing heat exchange between the combustion exhaust gas and the hot water. The condensed combustion exhaust gas is discharged outwardly through the exhaust pipe 11 d. The condensed water is supplied to the water tank 14 through the condensed water supply pipe 12a. The water tank 14 purifies the condensed water by using an ion exchange resin.

The heat exchanger 12, the hot water storage tank 21, and the hot water circulation line 22 which are described above constitute a waste heat recovery system 20. The waste heat recovery system 20 collects waste heat from the fuel cell module 11 and stores the collected waste heat in the hot water.

A DC voltage which is output from the fuel cell 34 is input to the inverter 13 and the inverter 13 converts the input DC voltage into a predetermined AC voltage. The converted AC voltage is output to a power line 16b which is connected to an AC system power supply 16a and an external power load 16c (for example, electric appliance). The inverter 13 receives an AC voltage input from the system power supply 16a through the power line 16b. The inverter 13 converts the input AC voltage into a predetermined DC voltage, and then outputs the converted DC voltage to auxiliary machines (pumps, blower, and the like) or the control device 15. The control device 15 drives the auxiliary machines so as to control an operation of the fuel cell system.

The fuel cell module 11 (30) includes the casing 31, an evaporation section 32, the reforming unit 33, and the fuel cell 34. The casing 31 is formed of a heat-insulating material to have a box shape.

The evaporation section 32 is heated by a combustion gas (which will be described later), evaporates the reforming water which is supplied and generates steam. The evaporation section 32 preheats the fed raw reforming material. The evaporation section 32 mixes the steam which is generated in this manner with the preheated raw reforming material and supplies the mixture to the reforming unit 33. Examples of the raw reforming material include a reforming gaseous fuel such as natural gas and LP gas or a reforming liquid fuel such as kerosene, gasoline, and methanol. In this embodiment, descriptions will be made by using natural gas as the raw reforming material.

One end (lower end) of the water supply pipe 11 b is connected to the water tank 14, and another end of the water supply pipe 11 b is connected to the evaporation section 32. One end of the raw reforming material supply pipe 11 a is connected to the supply source Gs, and another end of the raw reforming material supply pipe 11 a is connected to the evaporation section 32. The supply source Gs is, for example, a gas supply pipe of city gas or a gas cylinder of LP gas.

The reforming unit 33 is heated by the above-described combustion gas so as to receive heat necessary for a steam reforming reaction, and thus generates and discharges a reformed gas from a gas mixture (raw reforming material and steam) which is fed from the evaporation section 32. The reforming unit 33 is filled with a catalyst (for example, a Ru-based catalyst or a Ni-based catalyst). The gas mixture is reacted and reformed by the catalyst and thus a gas containing hydrogen gas, carbon monoxide, and the like is generated (so-called steam reforming reaction). The reformed gas contains hydrogen, carbon monoxide, carbon dioxide, steam, unreformed natural gas (methane gas), and reforming water (steam) which is not used in reforming. In this manner, the reforming unit 33 generates the reformed gas (fuel) from the raw reforming material (raw fuel) and the reforming water, and supplies the generated reformed gas to the fuel cell 34. The steam reforming reaction is an endothermic reaction.

The fuel cell 34 generates electricity with the fuel and the oxidant gas. The fuel cell 34 is configured in such a manner that a plurality of cells 34a are stacked, and the cell includes a fuel electrode, an air electrode (oxidant electrode), and an electrolyte which is interposed between both of the electrodes. The fuel cell in this embodiment may be a solid oxide fuel cell and use zirconium oxide which is one type of solid oxide, as the electrolyte. Hydrogen, carbon monoxide, methane gas, and the like are fed as the fuel to the fuel electrode of the fuel cell 34. Natural gas, coal gas, and the like may also be used as a direct fuel in addition to hydrogen. In this case, the reforming unit 33 may be omitted.

A fuel flow path 34b in which the reformed gas corresponding to the fuel flows is formed on the fuel electrode side of the cell 34a. An air flow path 34c in which the air (cathode air) corresponding to the oxidant gas flows is formed on the air electrode side of the cell 34a.

The fuel cell 34 is provided on a manifold 35. The reformed gas is fed to the manifold 35 from the reforming unit 33 through the reformed gas supply pipe 38. The fuel flow path 34b has a lower end (one end) which is connected to a fuel outlet of the manifold 35, and the reformed gas discharged from the fuel outlet is introduced from the lower end and is discharged from an upper end. The cathode air which is delivered by the cathode air blower 11 c1 is fed through the cathode air supply pipe 11c, and is introduced from a lower end of the air flow path 34c and is output from an upper end thereof.

A combustion unit 36 is provided between the fuel cell 34, and the evaporation section 32 and the reforming unit 33. The combustion unit 36 combusts an anode off gas (fuel off gas) from the fuel cell 34 and a cathode off gas (oxidant off gas) from the fuel cell 34, and thereby heats the reforming unit 33. In the combustion unit 36, a flame 37 is generated by combusting the anode off gas. In the combustion unit 36, the anode off gas is combusted and thereby the combustion exhaust gas thereof is generated.

The fuel cell system includes the control device 15. The flow rate sensor 11 a2, the pressure sensor 11 a3, the shutoff valve 11a1, each of the pumps 11 a5, 11 b1, and 22a, and the cathode air blower 11 c1 which are described above are connected to the control device 15 (see Fig. 5). The control device 15 has a microcomputer (not illustrated). The microcomputer includes an input and output interface, a CPU, a RAM, and a ROM (none is illustrated) which are connected to each other through a bus. The CPU executes various programs necessary for an operation of the fuel cell system. The RAM temporarily stores variables necessary for execution of the same program. The ROM stores the programs.

As apparent from the above descriptions, the fuel cell system according to this embodiment includes the fuel cell 34, the reforming unit 33, the desulfurizer 11a6, the raw reforming material supply pipe 11a, the raw material pump 11 a5, the recycling gas pipe 39, and the pressure control valve 11a4. The fuel cell 34 generates electricity with the fuel and the oxidant gas. The reforming unit 33 generates the fuel with the raw reforming material from the raw reforming material supply source and the reforming water, and supplies the generated fuel to the fuel cell 34. The desulfurizer 11a6 removes the sulfur component which is contained in the raw reforming material and supplies the desulfurized raw reforming material to the reforming unit 33. The raw reforming material supply pipe 11a causes the raw reforming material to be fed to the desulfurizer 11a6. The raw material pump 11a5 is provided in the raw reforming material supply pipe 11a and pumps the raw reforming material to the desulfurizer 11a6. The recycling gas pipe 39 causes a portion of the fuel which is fed to the fuel cell 34 from the reforming unit 33 to return as a recycling gas to the introduction side of the raw material pump 11a5 in the raw reforming material supply pipe 11 a. The pressure control valve 11 a4 is provided on the supply source Gs side of the connection portion of the raw reforming material supply pipe 11a with the recycling gas pipe 39, and is opened when the pressure on the discharge side reaches the predetermined negative pressure Pa. The predetermined negative pressure Pa of the pressure control valve 11 a4 is set such that the flow rate from the raw material pump 11a5 is caused to be less than the minimum flow rate which is the minimum requirement for the fuel cell system, at the minimum pump opening degree which allows the raw material pump 11a5 to perform discharge.

According to this configuration, if driving control for the raw material pump 11a5 is started from 0, the raw material pump 11a5 allows discharge at a time of the minimum output (minimum pump opening degree). Further, attraction of the raw material pump 11a5 causes the pressure on the introduction side of the raw material pump 11a5, that is, on the discharge side of the pressure control valve 11 a4 to be negative. If the pressure on the discharge side of the pressure control valve 11a4 becomes the predetermined negative pressure Pa, and the pressure control valve 11 a4 is opened, the raw reforming material is discharged from the raw material pump 11a5. At this time, the flow rate from the raw material pump 11a5 is less than the minimum flow rate which is the minimum requirement for the fuel cell system, at the minimum pump opening degree which allows the raw material pump 11a5 to perform discharge. That is, even when the raw material pump 11a5 is driven with the minimum output, the flow rate of the raw reforming material from the raw material pump 11a5 may be adjusted from a flow rate which is less than the minimum flow rate for the fuel cell system. Thus, even when the raw material pump 11a5 is driven with the minimum output, it is possible to reliably ensure the minimum flow rate for the fuel cell system, and to suppress degradation of generation efficiency.

The predetermined negative pressure Pa of the pressure control valve 11 a4 is preferably set such that the pressure control valve 11 a4 is opened at the same time as when the raw material pump 11a5 has the minimum pump opening degree.

According to this configuration, as illustrated in Fig. 3, it is possible to adjust the flow rate from the raw material pump 11a5 without driving of the raw material pump 11a5 more than necessary. As illustrated in Fig. 2, when discharge from the raw material pump 11a5 is started, and then the pressure control valve 11a4 is opened, the raw reforming material is started to flow out from the raw material pump 11a5, but a driving amount of the raw material pump 11a5 is relatively large. By contrast, when the pressure control valve 11 a4 is opened at the same time as when the raw material pump 11a5 has the minimum pump opening degree, even though the driving amount of the raw material pump 11a5 is small, the raw reforming material can be started to flow out from the raw material pump 11a5.

A point that the backflow of the raw reforming material in the raw reforming material supply pipe 11 a to the recycling gas pipe 39 is prevented will be described. The recycling gas is a gas in which a portion of the reformed gas returns to the raw reforming material supply pipe 11 a from the reforming unit 33 by using a pressure difference, and is mixed with the raw reforming material of the raw reforming material supply pipe 11a. The pressure difference is a difference between outlet pressure of the reforming unit 33 (reforming-unit outlet pressure) and the pressure on the discharge side of the pressure control valve 11 a4 (pressure on the discharge side of the pressure control valve: secondary pressure of the pressure control valve). However, if the secondary pressure of the pressure control valve is greater than the outlet pressure of the reforming unit 33, the raw reforming material which is not subjected to desulfurization yet flows back in the recycling gas pipe 39, and flows into the fuel cell 34. Due to this, the fuel cell 34 is subjected to sulfur poisoning and deteriorated, and may fail early.

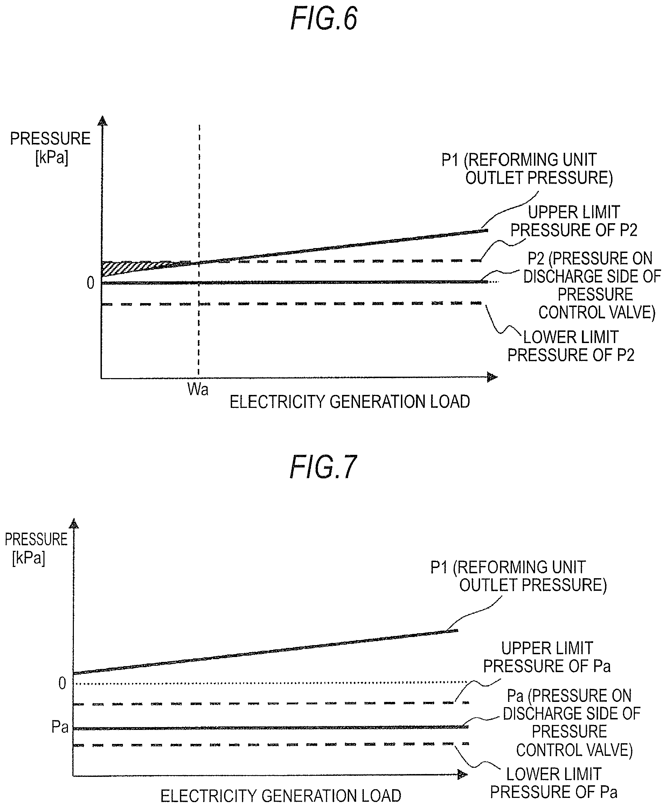

Fig. 6 illustrates a case where the pressure control valve 11a4 is opened at the atmospheric pressure. In this case, the pressure control valve 11 a4 is operated such that a pressure P2 on the discharge side is equal to the atmospheric pressure. Fig. 6 illustrates a relationship of the secondary pressure (P2) of the pressure control valve which includes a tolerance of the pressure control valve 11 a4, and the outlet pressure (P1) of the reforming unit. The outlet pressure P1 of the reforming unit has a value which is determined by using pressure drop due to a flow of a gas from the outlet of the reforming unit to combustion exhaust, or pressure drop due to combustion. The outlet pressure P1 of the reforming unit becomes smaller as a generation load or a flow rate of the fuel is small. If the tolerance (from upper limit pressure of P2 to lower limit pressure) is considered, P2>P1 is satisfied (a portion of slanted lines in Fig. 6) in a range of equal to or less than a generation load Wa and it is understood that the raw reforming material of the raw reforming material supply pipe 11 a flows back in the recycling gas pipe 39. There is a significantly high probability that back pressure is significantly low, P1≈P2 is satisfied, and a backflow occurs, in a state where combustion or the reforming reaction hardly occurs, like an initial startup and the like.

By contrast, as illustrated in Fig. 7, when the secondary pressure of the pressure control valve is set to the predetermined negative pressure value Pa, P1>Pa is normally satisfied in all cases, and a pressure difference occurs only in a direction from the outlet of the reforming unit 33 to the outlet of the pressure control valve 11a4. Thus, it is possible to suppress a backflow of the raw reforming material in the raw reforming material supply pipe 11 a to the recycling gas pipe 39.

In the above-described fuel cell system according to the embodiment, detection of a gas leakage from the recycling gas pipe 39 and the raw reforming material supply pipe 11a to the raw material pump 11a5 will be described.

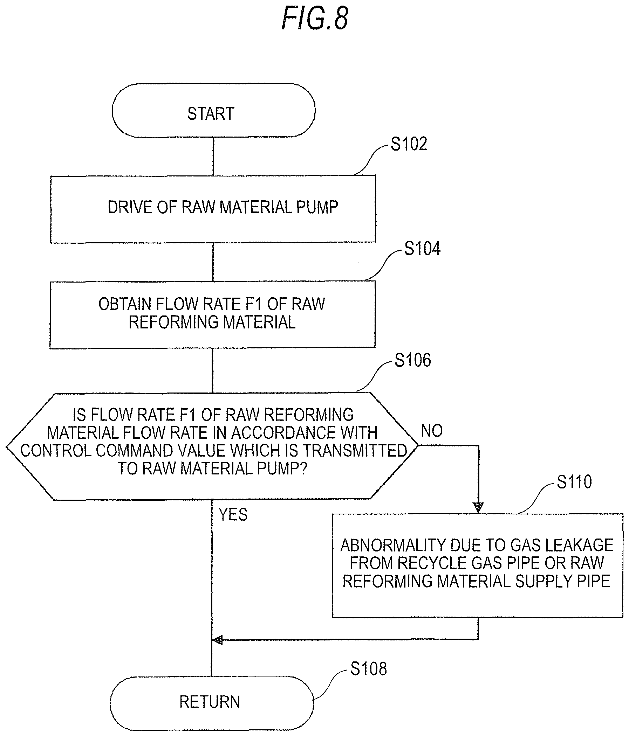

The control device 15 executes a flowchart illustrated in Fig. 8 in an operation of the fuel cell system (warm-up operation, generation operation). In Step S102, the control device 15 transmits a control command value corresponding to a generation amount of the fuel cell 34 to the raw material pump 11a5, in order to supply the fuel to the fuel cell 34 and drives the raw material pump 11a5 in accordance with the control command value. The raw reforming material supply pipe 11a performs attraction until the pressure on the introduction side of the raw material pump 11a5, that is, the pressure on the discharge side of the pressure control valve 11a4 reaches the predetermined negative pressure Pa. If the pressure on the introduction side of the raw material pump 11a5, that is, the pressure on the discharge side of the pressure control valve 11a4 reaches the predetermined negative pressure Pa, the pressure control valve 11 a4 is opened and the raw reforming material passes through the pressure control valve 11 a4. If the raw reforming material flows in the raw reforming material supply pipe 11a, the recycling gas flows in the recycling gas pipe 39.

After the process of Step S102, the control device 15 obtains a flow rate F1 of the raw reforming material which is detected by the flow rate sensor 11a2, in Step S104. In Step S106, the control device 15 determines whether or not the flow rate F1 of the raw reforming material which is obtained in Step S104 reaches a flow rate corresponding to an output of the control command value for the raw material pump 11 a5.

If a gas leakage does not occur in the raw reforming material supply pipe 11a and the recycling gas pipe 39, attraction is performed until the pressure on the introduction side of the raw material pump 11a5 reaches the predetermined negative pressure Pa. If the pressure on the introduction side of the raw material pump 11a5 reaches the predetermined negative pressure Pa, the raw reforming material starts passing through the pressure control valve 11 a4 and the flow rate F1 of the raw reforming material which is detected by the flow rate sensor 11 a2 becomes a flow rate in accordance with an output of the control command value which is transmitted to the raw material pump 11a5. In this case, the control device 15 determines to be "YES" in Step S106, and causes the program to proceed to Step S108 and to end.

On the other hand, if the gas leakage occurs in the raw reforming material supply pipe 11a or the recycling gas pipe 39, the pressure on the introduction side of the raw material pump 11a5 (pressure on the discharge side of the pressure control valve 11a4) in the raw reforming material supply pipe 11 a becomes the atmospheric pressure. That is, since the pressure on the introduction side of the raw material pump 11a5 in the raw reforming material supply pipe 11a is higher than the predetermined negative pressure Pa, the pressure control valve 11a4 is not opened, and the flow rate of the raw reforming material which is detected by the flow rate sensor 11a2 becomes substantially 0 or a low flow rate. In this case, the control device 15 determines to be "NO" in Step S106 and causes the program to proceed to Step S110. In Step S110, the control device 15 determines that abnormality occurs due to the gas leakage of the raw reforming material supply pipe 11 a or the recycling gas pipe 39. After the process of Step S110, the control device 15 causes the program to proceed to Step S108 and to end.

In this manner, the fuel cell system according to the embodiment includes the flow rate sensor 11a2 which detects the flow rate of the raw reforming material, on the introduction side of the pressure control valve 11a4 in the raw reforming material supply pipe 11a. The fuel cell system includes a gas leakage detection section (Steps S106 and S110) which detects the gas leakage of the raw reforming material supply pipe 11a or the recycling gas pipe 39 when the flow rate sensor 11a2 does not detect a predetermined flow rate, during a time when the raw material pump 11a5 is driven. The gas leakage detection section detects the gas leakage of the raw reforming material supply pipe 11a or the recycling gas pipe 39 when it is detected that the flow rate F1 detected by the flow rate sensor 11 a2 is not a flow rate in accordance with an output of the control command value which is transmitted to the raw material pump 11a5.

According to this embodiment, the fuel cell system includes the gas leakage detection section, and thus it is possible to find the gas leakage early in the raw reforming material supply pipe 11 a and the recycling gas pipe 39.

In this embodiment, the flow rate sensor 11a2 is provided on the introduction side of the pressure control valve 11 a4 in the raw reforming material supply pipe 11 a. However, this disclosure is not limited thereto, and the flow rate sensor 11a2 may be provided between the pressure control valve 11 a4 of the raw reforming material supply pipe 11 a and a connection portion of the recycling gas pipe 39. In this case, similar effects may also be obtained.

The above-described gas leakage detection section (Steps S106 and 110) may detect abnormality when the absolute value of the flow rate (detection flow rate) which is detected by the flow rate sensor 11a2 is less than a determination flow rate value. The gas leakage detection section may detect abnormality when a difference between a control command value (target flow rate) and the detection flow rate is equal to or greater than a determination difference.

The above-described gas leakage detection section (Steps S106 and 110) may detect abnormality when a control command value (duty ratio) for the raw material pump 11a5 is equal to or greater than a determination control command value (for example, 90%), and the flow rate of the raw reforming material which is detected by the flow rate sensor 11a2 is 0 (NLM). In this case, it is possible to reliably detect abnormality. The above-described gas leakage detection section (Steps S106 and 110) may detect abnormality when a difference between a target control command value (corresponding to the target flow rate) and an actual control command value is equal to or greater than a determination difference.

If the gas leakage occurs as described above, the pressure on the discharge side of the pressure control valve 11 a4 is higher than the predetermined negative pressure Pa. Thus, the pressure control valve 11 a4 is closed. As a result, it is possible to automatically block a flow of the raw reforming material and suppress the gas leakage when the gas leakage occurs.

The fuel cell 34 in the above-described fuel cell system according to the embodiment is a solid oxide fuel cell (SOFC). However, this disclosure is not limited thereto, and the fuel cell 34 according to the embodiment may also be applied in a solid polymer fuel cell (PEFC).

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the scope of the present invention as defined in the claims, be embraced thereby.

A fuel cell system includes: a fuel cell (34) generating electricity using a fuel and an oxidant gas; a reforming unit (33) generating the fuel from a raw reforming material from a raw reforming material supply source and reforming water, and supplying the fuel to the fuel cell; a desulfurizer (11a6) removing a sulfur component contained in the raw reforming material and supplying the desulfurized raw reforming material to the reforming unit; a raw reforming material supply pipe (11a) causing the raw reforming material to be fed to the desulfurizer; a raw material pump (11a5) provided in the raw reforming material supply pipe and supplying the raw reforming material to the desulfurizer; a recycling fuel pipe (39) causing a portion of the fuel to return to an introduction side of the raw material pump; and a pressure control valve (11a4) provided on the raw reforming material supply pipe.

## Claims

1. A fuel cell system comprising:
a fuel cell (34) that generates electricity using a fuel and an oxidant gas;
a reforming unit (33) that generates the fuel from a raw reforming material from a raw reforming material supply source and reforming water, and supplies the fuel to the fuel cell;
a desulfurizer (11a6) that removes a sulfur component contained in the raw reforming material and supplies the desulfurized raw reforming material to the reforming unit;
a raw reforming material supply pipe (11 a) that causes the raw reforming material to be fed to the desulfurizer;
a raw material pump (11a5) that is provided in the raw reforming material supply pipe and supplies the raw reforming material to the desulfurizer;
a recycling fuel pipe (39) that causes a portion of the fuel which is fed to the fuel cell from the reforming unit to return as a recycling fuel to an introduction side of the raw material pump in the raw reforming material supply pipe; and
a pressure control valve (11a4) that is provided on the raw reforming material supply source side of a connection portion of the raw reforming material supply pipe with the recycling fuel pipe, and is opened when pressure on a discharge side reaches a predetermined negative pressure,
wherein the predetermined negative pressure of the pressure control valve is set such that a flow rate of the raw reforming material from the raw material pump is caused to be less than a minimum flow rate which is a minimum requirement for the fuel cell system, at a minimum pump opening degree which allows the raw material pump to perform discharge.

2. The fuel cell system according to claim 1, wherein
the predetermined negative pressure of the pressure control valve is set such that the pressure control valve is opened at the same time as when the raw material pump has the minimum pump opening degree.

3. The fuel cell system according to claim 1 or claim 2, further comprising:
a flow rate sensor (11a2) that is provided on the introduction side of the pressure control valve in the raw reforming material supply pipe or between the pressure control valve and the connection portion with the recycling fuel pipe, and detects a flow rate of the raw reforming material; and
a gas leakage detection section (15) that detects a gas leakage of the raw reforming material supply pipe or the recycling fuel pipe based on the flow rate of the raw reforming material which is detected by the flow rate sensor when the raw material pump is driven.

## Patentansprüche

1. Brennstoffzellensystem umfassend:
eine Brennstoffzelle (34), die durch Verwendung eines Brennstoffes und eines Oxidationsgases Elektrizität erzeugt;
eine Reformierungseinheit (33), die den Brennstoff aus einem unbearbeiteten Reformierungsmaterial aus einer unbearbeiteten Reformierungsmateriallieferquelle und Reformierungswasser erzeugt und den Brennstoff zur Brennstoffzelle liefert;
einen Entschwefler (11a6), der eine Schwefelkomponente, die in dem unbearbeiteten Reformierungsmaterial enthalten ist, entfernt und das entschwefelte unbearbeitete Reformierungsmaterial zur Reformierungseinheit liefert;
eine Rohrleitung zum Liefern des unbearbeiteten Reformierungsmaterials (11a), die das unbearbeitete Reformierungsmaterial dazu veranlasst, dem Entschwefler zugeführt zu werden;
eine Pumpe für das unbearbeitete Material (11a5), die in dem Rohr zum Liefern des unbearbeiteten Reformierungsmaterials vorgesehen ist und das unbearbeitete Reformierungsmaterial zum Entschwefler liefert;
eine Rohrleitung für recycelten Brennstoff (39), die einen Teil des Brennstoffs, welcher der Brennstoffzelle von der Reformierungseinheit zugeführt wird, dazu veranlasst, als ein recycelter Brennstoff zu einer Einlassseite der Pumpe für das unbearbeitete Material in der Rohrleitung zum Liefern des unbearbeiteten Reformierungsmaterials zurückzukehren; und
ein Drucksteuerventil (11a4), das auf der unbearbeiteten Reformierungsmateriallieferquellenseite eines Verbindungsabschnitts der Rohrleitung zum Liefern des unbearbeiteten Reformierungsmaterials mit der Rohrleitung für den recycelten Brennstoff vorgesehen ist, und das geöffnet wird, wenn Druck auf der Austrittseite einen festgelegten negativen Druck erreicht,
wobei der festgelegte negative Druck des Drucksteuerventils so eingestellt ist, dass eine Durchflussmenge des unbearbeiteten Reformierungsmaterials von der Pumpe für das unbearbeitete Material dazu veranlasst wird, kleiner als eine Minimum-Durchflussmenge, die eine Minimums-Anforderung an das Brennstoffzellensystem ist, zu sein, bei einem minimalen Pumpenöffnungsgrad, der der Pumpe für das unbearbeitete Material gestattet, einen Austritt durchzuführen.

2. Brennstoffzellensystem nach Anspruch 1, wobei
der festgelegte negative Druck des Drucksteuerventils so eingestellt ist, dass das Drucksteuerventil zur selben Zeit geöffnet wird, als wenn die Pumpe für das unbearbeitete Material den minimalen Pumpenöffnungsgrad hat.

3. Brennstoffzellensystem nach Anspruch 1 oder 2, des Weiteren umfassend:
einen Durchflussmengensensor (12a2), der auf der Einlassseite des Drucksteuerventils in der Rohrleitung zum Liefern des unbearbeiteten Reformierungsmaterials oder zwischen dem Drucksteuerventil und dem Verbindungsabschnitt mit der Rohrleitung für den recycelte Brennstoff vorgesehen ist und eine Durchflussmenge des unbearbeiteten Reformierungsmaterial ermittelt; und
einen Gasleckageermittlungsbereich (15), der eine Gasleckage der Rohrleitung zum Liefern des unbearbeiteten Reformierungsmaterials oder der Rohrleitung für den recycelten Brennstoff ermittelt, basierend auf der Durchflussmenge des unbearbeiteten Reformierungsmaterials, die durch den Durchflussmengensensor ermittelt wird, wenn die Pumpe für das unbearbeitete Material angetrieben wird.

## Revendications

1. Système de pile à combustible comprenant :
une pile à combustible (34) qui génère de l'électricité en utilisant un combustible et un gaz oxydant ;
une unité de reformage (33) qui génère le combustible à partir d'une matière première de reformage provenant d'une source d'alimentation en matière première de reformage et d'eau de reformage, et amène le combustible à la pile à combustible ;
un désulfurant (11a6) qui retire un composant de soufre contenu dans la matière première de reformage et amène la matière première de reformage désulfurée à l'unité de reformage ;
un tuyau d'alimentation en matière première de reformage (11a) qui provoque l'alimentation du désulfurant en matière première de reformage ;
une pompe de matière première (11a5) qui est prévue dans le tuyau d'alimentation en matière première de reformage et amène la matière première de reformage au désulfurant ;
un tuyau de combustible de recyclage (39) qui amène une partie du combustible qui est amené à la pile à combustible à partir de l'unité de reformage, à revenir sous forme de combustible de recyclage vers un côté d'introduction de la pompe de matière première dans le tuyau d'alimentation en matière première de reformage ; et
une valve de régulation de pression (11a4) qui est prévue du côté de la source d'alimentation en matière première de reformage d'une partie de raccordement du tuyau d'alimentation en matière première de reformage avec le tuyau de combustible de recyclage, et est ouverte lorsque la pression du côté de la décharge atteint une pression négative prédéterminée,
valve de régulation de pression est réglée de sorte qu'un débit de la matière première de reformage provenant de la pompe de matière première est amené à être inférieur à un débit minimum qui est une exigence minimum pour le système de pile à combustible, à un degré d'ouverture de pompe minimum qui permet à la pompe de matière première de réaliser la décharge.

2. Système de pile à combustible selon la revendication 1, dans lequel :
la pression négative prédéterminée de la valve de régulation de pression est réglée de sorte que la valve de régulation de pression est ouverte en même temps que le moment où la pompe de matière première a le degré d'ouverture de pompe minimum.

3. Système de pile à combustible selon la revendication 1 ou la revendication 2, comprenant en outre :
un capteur de débit (11a2) qui est prévu du côté de l'introduction de la valve de régulation de pression dans le tuyau d'alimentation en matière première de reformage ou entre la valve de régulation de pression et la partie de raccordement avec le tuyau de combustible de recyclage, et détecte un débit de la matière première de reformage ; et
une section de détection de fuite de gaz (15) qui détecte une fuite de gaz du tuyau d'alimentation en matière première de reformage ou du tuyau de combustible de recyclage en fonction du débit de la matière première de reformage qui est détecté par le capteur de débit lorsque la pompe de matière première est entraînée.
